# EUROPÄISCHE PATENTANMELDUNG

(11) **EP 0 893 325 A1**
(43) Veröffentlichungstag der Anmeldung: **27.01.1999**
(21) Anmeldenummer: 97117457.8
(22) Anmeldetag: 09.10.1997
(51) Int. Cl.: B62B 3/14

(54) **Halteteil zum Tragen eines Rechners, insbesondere eines Handscanners**

(30) Priorität: 22.07.1997 DE 19731271
(71) Anmelder: WANZL METALLWARENFABRIK GMBH, D-89336 Leipheim (DE)
(72) Erfinder: Blaha, Martin, 89335 Ichenhausen (DE)

(57) **Zusammenfassung**

Die Erfindung betrifft ein Halteteil (1) zum Tragen eines Rechners (15), insbesondere eines Handscanners, wobei das Halteteil (1) einen Halter (2) zur Befestigung an einem Einkaufswagen sowie eine Halteeinrichtung (4) zur Aufnahme des Rechners (15) aufweist und wobei der Rechner (15) an seiner dem Anzeigefeld (18) abgewandten hinteren Seite (17) mit einem als Vertiefung und/oder als Vorsprung gestalteten Stützbereich (19) ausgestattet ist und das Halteteil (1) Mittel zum lösbaren Befestigen des Rechners (15) aufweist.
Es ist vorgesehen eines dieser Mittel als eine der Form des Stützbereiches (19) angepaßte Auflage (11) zu gestalten.

## Beschreibung

Die Erfindung betrifft ein Halteteil zum Tragen eines Rechners, insbesondere eines Handscanners wobei das Halteteil einen Halter zum Befestigen an einem Einkautswagen sowie eine Halteeinrichtung zur Aufnahme des Rechners aufweist und wobei der Rechner an seiner dem Anzeigefeld abgewandten hinteren Seite mit einem als Vertiefung und/oder als Vorsprung gestalteten Stützbereich ausgestattet ist und das Halteteil Mittel zum lösbaren Befestigen des Rechners aufweist.

Es sind aus Kunststoff gefertigte, behälterförmige Halteteile bekannt, die am Schiebegriff der Einkaufswagen angebracht sind. Bei dieser Ausführungsform läßt sich der passende Rechner mit seinem unteren Schaftende von oben her in die behälterförmige Vertiefung des Halteteiles einsetzen und aus dieser wieder entnehmen.

Ein weiteres bekanntes Halteteil ist im deutschen Gebrauchsmuster G 296 12 195.9 näher beschrieben. Dieses Halteteil ist für einen Rechner geeignet, der mit einer horizontal sich erstreckenden Öffnung ausgestattet ist, mit welcher der Rechner auf einen am Halteteil befindlichen Vorsprung aufsetzbar ist, wobei die hintere Seite des Rechners einen leicht gebogenen Stützbereich aufweist, mit dem der Rechner an einer am Halteteil befindlichen Auflage anliegt. Im auf das Halteteil aufgesetztem Zustand wird der Rechner durch zwei zum Halteteil gehörende Abschnitte begrenzt, die so weit auseinander liegen, daß der Rechner entlang des Vorsprunges eine begrenzte Wegstrecke hin und her bewegbar ist. Diese Bewegbarkeit ist erforderlich, um den Rechner von Hand vom Halteteil lösen und ihn wieder auf das Halteteil aufsetzen zu können.
Inzwischen sind Rechner, insbesondere Handscanner bekannt, die anstelle der eben erwähnten Öffnung einen räumlich geformten Stützbereich aufweisen, der an der hinteren, dem Anzeigefeld des Rechners abgewandten Seite angeordnet ist und mit dem das Abstellen des Rechners ermöglicht werden soll.

Es ist Aufgabe der Erfindung, für diese Art von Rechner ein geeignetes Halteteil zu entwickeln.

Als Lösung der Aufgabe wird vorgeschlagen, daß eines der zum lösbaren Befestigen des Rechners erforderlichen Mittel als eine der Form des Stützbereiches angepaßte Auflage gestaltet ist.

Durch die vorgeschlagene Lösung ist eine sichere Befestigung und ein bequemes Abnehmen und Aufsetzen des Rechners möglich. Die Anpassung der Auflage an die räumliche Form des Stützbereiches ermöglicht einen satten Sitz des Rechners auf dem Halteteil wobei der Rechner mit seiner hinteren Seite zusätzlich an einem weiteren Abschnitt des Halteteiles abgestützt sein kann. Gemäß einer Erweiterung der Erfindung ergibt ein Anpassen des zwischen den beiden Halteabschnitten befindlichen Zwischenraumes an die Breite des Rechners eine Klemmverbindung zwischen den Seitenflächen des Rechners und den Halteabschnitten, so daß der Rechner am Halteteil stramm eingerastet ist, allerdings auch ohne große Kraftanstrengung vom Halteteil wieder abgenommen werden kann.

Die Erfindung wird anhand eines Ausführungsbeispieles näher erläutert. Es zeigt
Fig. 1 ein Halteteil sowie
Fig. 2 das gleiche Halteteil mit aufgesetztem Rechner.

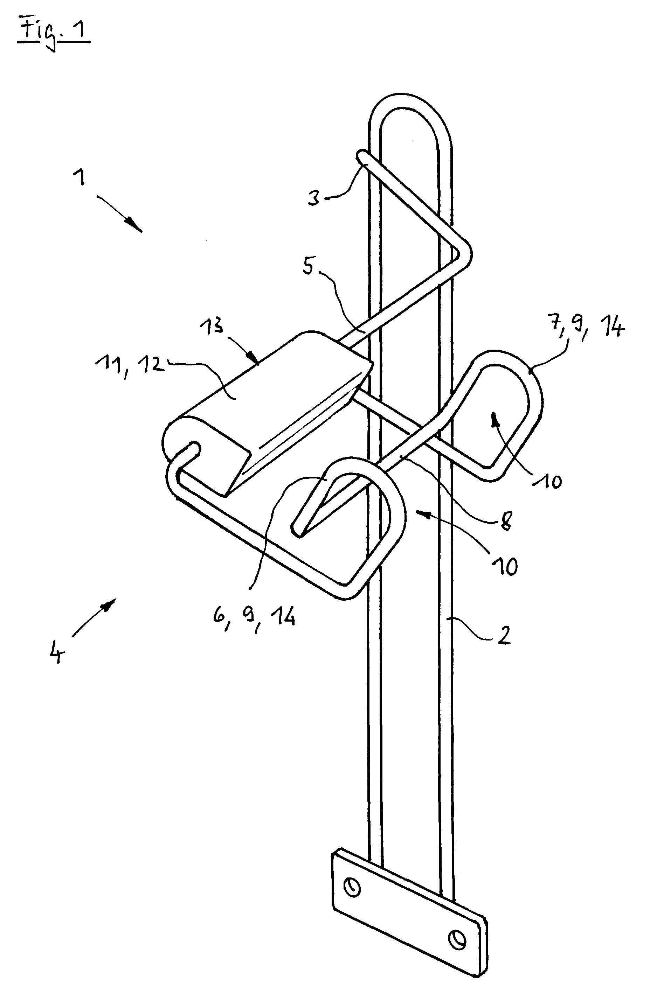

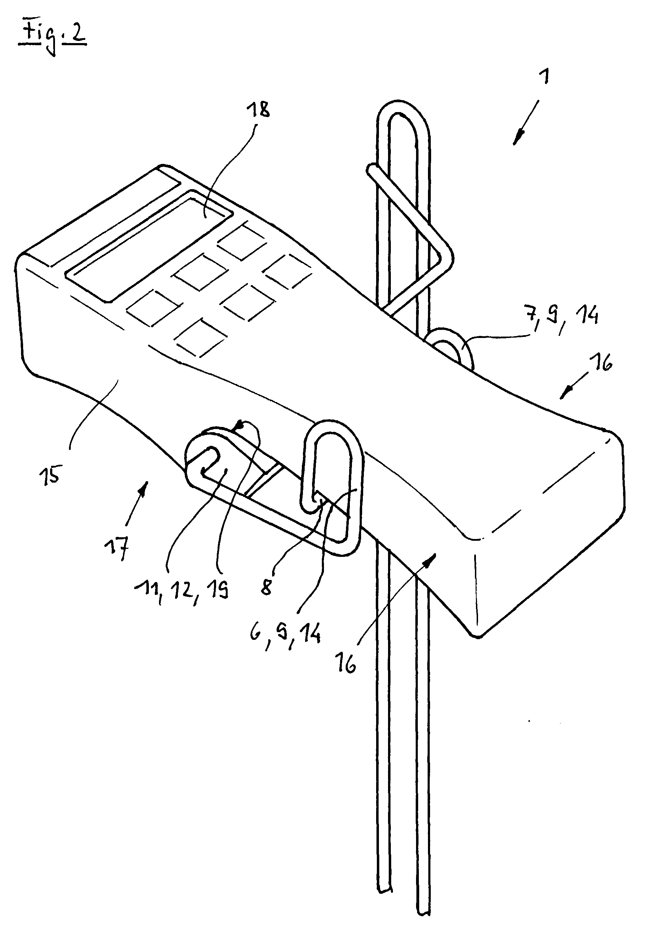

Das in Fig. 1 dargestellte Halteteil 1 ist zum bevorzugten Anbau an bekannte Einkaufswagen oder sonstigen, dem Einkauf dienenden Transportwagen bestimmt. Das Halteteil 1 weist einen Halter 2 auf, der zum Befestigen des Halteteiles 1 an einen, nicht näher dargestellten Einkaufswagen bestimmt ist. Das größtenteils aus Draht gefertigte Halteteil 1 weist eine Halteeinrichtung 4 auf, die mit dem Halter 2 verbunden ist. Der am Halter 2 angeschweißte, bevorzugt aus einem Drahtstück gefertigte Befestigungsabschnitt 3 der Halteeinrichtung 4 biegt ab in einen an dieser Stelle waagrechten Stützabschnitt 5, an dein ein bevorzugt aus Kunststoff bestehendes Stützteil 12 befestigt ist. Der Stützabschnitt 5 durchdringt das Stützteil 12, um anschließend schräg nach hinten und nach unten abzufallen. Nach kurzer Wegstrecke steigt der Stützabschnitt 5 wieder schräg nach oben an und bildet weiterführend einen bügelförmigen Krümmungsabschnitt 6. Dem Krümmungsabschnitt 6 folgt ein Querstück 8, das parallel zum Stützabschnitt 5 in Richtung zum Halter 2 verläuft, um anschließend spiegelbildlich wieder einen Krümmungsabschnitt 7 zu bilden und von diesem aus nach vorne schräg ansteigend zum Stützteil 12 zurückzukehren und in dieses zu münden. Durch die eben beschriebene Anordnung sind Mittel gebildet, die ein lösbares Befestigen eines Rechners 15, insbesondere eines Handscanners, am Halteteil 1 ermöglichen. Eines dieser Mittel ist eine der räumlichen Form des Stützbereiches 19 des Rechners 15 angepaßte Auflage 11, die durch das Stützteil 12 gebildet ist. Das entlang des Stützabschnittes 5 sich erstreckende Stützteil 12 ist an seiner oberen Seite 13 gerundet. Diese konvexe Ausbildung ist der konkaven räumlichen Form des am Rechner 15 befindlichen Stützbereiches 19 angepaßt, siehe auch Fig. 2. Der Rechner 15 kann somit annähernd formschlüssig auf die durch das Stützteil 12 gebildete Auflage 11 aufgesetzt werden. Als weiteres Mittel zum sicheren Halten des Rechners 15 am Halteteil 1 dienen die beiden bügelartigen Krümmungsabschnitte 6, 7, welche Halteabschnitte 9 für den Rechner 15 bilden. Die Ebenen 10 der auch auf andere zweckmäßige Weise gestaltbaren Halteabschnitte 9 verlaufen quer zur Längsrichtung des Stützabschnittes 5 und des Querstückes 8. Der Abstand der Halteabschnitte 9 ist in Bezug zum Rechner 15 so gewählt, daß über die Halteabschnitte 9 eine Klemmwirkung mit dem auf das Halteteil 1 aufgesetzten Rechner 15 erzielbar ist. Die Halteabschnitte 9 bilden somit Klemmstellen 14 für den Rechner 15, wobei die Klemmkräfte in horizontaler Richtung auf die Längsseiten 16 des Rechners 15 wirken, siehe auch Fig. 2.

Fig. 2 zeigt einen auf das Halteteil 1 aufgesetzten Rechner 15. Der Rechner 15 besitzt eine längliche Grundform. An seiner hinteren, dem Anzeigefeld 18 abgewandten Seite 17 weist der Rechner 15 einen räumlich geformten Stützbereich 19 auf, der von der Seite betrachtet halbrundförmig gestaltet ist und somit eine Vertiefung zur Aufnahme der als Stützteil 12 gebildeten Auflage 11 des Halteteiles 1 bildet. Durch die halbrunde Ausführung des Stützbereiches 19 und durch die an diese Ausformung angepaßte Form der Auflage 11 läßt sieh der Rechner 15 unter Abstützung an der Auflage 11 bogenförmig verschwenken. Diese Verschwenkung ist dienlich beim Aufsetzen und beim Abnehmen des Rechners 15 vom Halteteil 1. Die Halteabschnitte 9 befinden sich an zwei gegenüberliegenden Abschnitten der beiden Längsseiten 16 des Rechners 15. Die Distanz zwischen den Halteabschnitten 9 ist geringfügig kleiner als die Breite des Rechners 15 an dieser Stelle. Dadurch läßt sich eine Klemmwirkung zwischen dem Rechner 15 und den Halteabschnitten 9 erzielen, so daß der Rechner 15 sich nicht selbständig von, Halteteil 1 lösen kann. Der Rechner 15 kann zusätzlich mit seiner hinteren Seite 17 am Querstück 8 abgestützt sein.

Der Stützbereich 19 des Rechners 15 läßt sich natürlich auf verschiedene Weise räumlich gestalten. Anstelle der gezeigten Vertiefung kann auch eine wulstartige, quer verlaufende Erhöhung vorgesehen sein, so daß die am Halteteil 1 befindliche Auflage 11 entsprechend als Vertiefung ausgebildet sein muß, um die formschlüssige Verbindung dieser beiden Bereiche zu erzielen. Denkbar ist auch ein von der hinteren Seite 17 des Rechners 15 abstellender kugeliger Zapfen, der in eine an der Auflage 11 befindliche Vertiefung einsetzbar ist.
Als eine am Rechner 15 befindliche, den Stützbereich 19 bildende Vertiefung kann auch wenigstens ein Durchbruch verstanden werden, der von der vorderen zur hinteren Seite 17 des Rechners 15 reicht. Am Halteteil 1 befände sich dann wenigstens eine vorsprungartige, der Form des so gestalteten Stützbereiches 19 angepaßte Auflage 11.

## Patentansprüche

1. Halteteil (1) zum Tragen eines Rechners (15), insbesondere eines Handscanners, wobei das Halteteil (1) einen Halter (2) zur Befestigung an einem Einkaufswagen sowie eine Halteeinrichtung (4) zur Aufnahme des Rechners (15) aufweist und wobei der Rechner (15) an seiner dem Anzeigefeld (18) abgewandten hinteren Seite (17) mit einem als Vertiefung und/oder als Vorsprung gestalteten Stützbereich (19) ausgestattet ist und das Halteteil (1) Mittel zum lösbaren Befestigen des Rechners (15) aufweist, dadurch **gekennzeichnet,** daß eines dieser Mittel als eine der Form des Stützbereiches (19) angepaßte Auflage (11) gestaltet ist.

2. Halteteil zum Tragen eines Rechners, nach Anspruch 1, dadurch **gekennzeichnet,** daß die Auflage (11) durch ein an der Halteeinrichtung (4) befestigbares Stützteil (12) gebildet ist.

3. Halteteil zum Tragen eines Rechners, nach Anspruch 1 oder 2, dadurch **gekennzeichnet,** daß die Auflage (11) an einem waagrechten Stützabschnitt (5) der Halteeinrichtung (4) angeordnet ist.

4. Halteteil zum Tragen eines Rechners, nach einem der Ansprüche 1 bis 3, dadurch **gekennzeichnet,** daß die Auflage (11) vom Stützabschnitt (5) durchdrungen ist.

5. Halteteil zum Tragen eines Rechners, nach einen, der Ansprüche 1 bis 4, dadurch **gekennzeichnet,** daß die Auflage (11) aus Kunststoff gestaltet ist.

6. Halteteil zum Tragen eines Rechners, nach einem der Ansprüche 1 bis 5, dadurch **gekennzeichnet,** daß der Stützabschnitt (5) im Anschluß an die Auflage (11) schräg nach unten gerichtet ist, um in einem Abstand zum Stützteil (12) zwei Halteabschnitte (9) für den Rechner (15) zu bilden.

7. Halteteil zum Tragen eines Rechners, nach einen, der Ansprüche 1 bis 6, dadurch **gekennzeichnet,** daß die Halteabschnitte (9) bügelförmig gestaltet sind.

8. Halteteil zum Tragen eines Rechners, nach einem der Ansprüche 1 bis 7, dadurch **gekennzeichnet,** daß die Ebenen (10) der Halteabschnitte (9) quer zur Längsrichtung des Stützabschnittes (5) angeordnet sind.

9. Halteteil zum Tragen eines Rechners, nach einen, der Ansprüche 1 bis 8, dadurch **gekennzeichnet,** daß die Halteabschnitte (9) als auf den Rechner (15) einwirkende Klemmstellen (14) bestimmt sind.

10. Halteteil zum Tragen eines Rechners, nach einem der Ansprüche 1 bis 9, dadurch gekennzeichnet, daß die Klemmkräfte der Klemmstellen (14) in horizontaler Richtung auf die Längsseiten (16) des Rechners (15) wirken.

11. Halteteil zum Tragen eines Rechners, nach einem der Ansprüche 1 bis 10, dadurch **gekennzeichnet,** daß die Stützabschnitte (5) durch ein Querstück (8) verbunden sind, das zum zusätzlichen Abstützen des Rechners (15) bestimmt ist.

12. Halteteil zum Tragen eines Rechners, nach einem der Ansprüche 1 bis 11, dadurch **gekennzeichnet,** daß die Halteeinrichtung (4) aus Draht, bevorzugt aus einem Drahtstück gefertigt ist.
